# EUROPEAN PATENT APPLICATION

(11) **EP 4 641 471 A1**
(43) Date of publication of application: **29.10.2025**
(21) Application number: 25168721.6
(22) Date of filing: 07.04.2025
(51) Int. Cl.: G06Q 30/0251, G06Q 30/0601

(54) **METHOD, APPARATUS, DEVICE, AND MEDIUM FOR CONTENT PRESENTATION**

(30) Priority: 07.04.2024 CN 202410411712
(71) Applicant: BEIJING YOUZHUJU NETWORK TECHNOLOGY CO. LTD., Beijing 101299 (CN)
(72) Inventor: Jia, Li, Beijing, 100028 (CN)
(74) Representative: Grünecker Patent- und Rechtsanwälte PartG mbB

(57) **Abstract**

According to embodiments of the disclosure, there are provided a method, an apparatus, a device and a medium for content presentation. The method includes: receiving a service viewing request from a client device; determining, in response to the service viewing request, a primary service and at least one additional service to be provided; and providing, to the client device, a presentation of an aggregate page including primary service information related to the primary service and additional service information related to the at least one additional service, where the primary service information is presented at a higher priority than the additional service information or the primary service information is more prominently presented than the additional service information.

## Description

### FIELD

Example embodiments of the present disclosure generally relate to the field of computer technologies, and in particular, to a method, an apparatus, a device, and a computer-readable storage medium for content presentation.

### BACKGROUND

The Internet provides access to a variety of resources. For example, various applications, products, audio and video content, etc. can be accessed over the Internet. In addition, content delivery and service promotion through the Internet have become a new form of information dissemination and are widely used. Advertising systems support displaying recommended content or services to users at different advertisement display opportunities, enabling users to browse and acquire corresponding services as needed. In addition, from the recommended content presented at the advertisement display opportunity, it is also possible to jump to a detailed page corresponding to the recommended content or service to view more content or obtain other interactive entry.

### SUMMARY

In a first aspect of the present disclosure, there is provided a method for content presentation. The method includes: receiving a service viewing request from a client device; determining, in response to the service viewing request, a primary service and at least one additional service to be provided; and providing, to the client device, a presentation of an aggregate page including primary service information related to the primary service and additional service information related to the at least one additional service, where the primary service information is presented at a higher priority than the additional service information or the primary service information is more prominently presented than the additional service information.

In a second aspect of the present disclosure, there is provided an apparatus for content presentation. The apparatus includes: a request receiving module configured to receive a service viewing request from a client device; a service determining module configured to determine, in response to the service viewing request, a primary service and at least one additional service to be provided; and a page providing module configured to provide, to the client device, a presentation of an aggregate page including primary service information related to the primary service and additional service information related to the at least one additional service, where the primary service information is presented at a higher priority than the additional service information or the primary service information is more prominently presented than the additional service information.

In a third aspect of the present disclosure, there is provided an electronic device. The device includes at least one processing unit and at least one memory. The at least one memory is coupled to the at least one processing unit and stores instructions executable by the at least one processing unit. The instructions, when executed by the at least one processing unit, cause the device to perform the method of the first aspect.

In a fourth aspect of the present disclosure, there is provided a computer-readable storage medium having a computer program stored thereon. The computer program, when executed by a processor, implements the method of the first aspect.

In a fifth aspect of the present disclosure, there is provided a computer program product. The computer program product is tangibly stored in a computer storage medium and includes computer-executable instructions. The computer-executable instructions, when executed by a device, cause the device to perform the method of the first aspect.

It should be understood that the content described in this section is not intended to identify key features or important features of the embodiments of the present disclosure, nor is it intended to limit the scope of the present disclosure. Other features of the present disclosure will become easily understood through the following description.

### BRIEF DESCRIPTION OF THE DRAWINGS

The above and other features, advantages and aspects of various embodiments of the present disclosure will become more apparent when taken in conjunction with the drawings and with reference to the following detailed description. Throughout the drawings, the same or similar reference numbers refer to the same or similar elements, where:
FIG. 1 shows a schematic diagram of an example environment in which embodiments of the present disclosure can be implemented;
FIG. 2 shows a flowchart of a signaling flow for content presentation according to some embodiments of the present disclosure;
FIG. 3A to FIG. 3D show schematic diagrams of a plurality of example pages according to some embodiments of the present disclosure;
FIG. 4 shows a schematic diagram of an example for content presentation according to some embodiments of the present disclosure;
FIG. 5 shows a schematic diagram of an example for content presentation according to some other embodiments of the present disclosure;
FIG. 6 shows a flowchart of a method for content presentation according to some embodiments of the present disclosure;
FIG. 7 shows a schematic structural block diagram of an apparatus for page presentation according to some embodiments of the present disclosure; and
FIG. 8 shows a block diagram of an electronic device in which one or more embodiments of the present disclosure can be implemented.

### DETAILED DESCRIPTION

The embodiments of the present disclosure will be described in more detail below with reference to the drawings. While certain embodiments of the present disclosure are shown in the drawings, it should be understood that the present disclosure can be implemented in various forms and should not be construed as limited to the embodiments set forth herein. Rather, these embodiments are provided for a thorough and complete understanding of the present disclosure. It should be understood that the drawings and the embodiments of the present disclosure are only for illustrative purposes and are not intended to limit the protection scope of the present disclosure.

In the description of the embodiments of the present disclosure, the term "comprise/include" and its like should be understood as open-ended inclusion, that is, "comprise/include but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below.

It should be understood that the data involved in the technical solutions of the present disclosure (including but not limited to the data itself, the acquisition or use of the data) should comply with the requirements of corresponding laws, regulations and related provisions.

It should be understood that before using the technical solutions disclosed in the embodiments of the present disclosure, the user should be informed of the type, use scope, use scenario, etc. of the personal information involved in the present disclosure in an appropriate manner according to relevant laws and regulations, and the user's authorization should be obtained.

For example, in response to receiving an active request from a user, prompt information is sent to the user to clearly prompt the user that the operation requested to be performed will require the acquisition and use of the user's personal information, so that the user can independently choose whether to provide the personal information to the software or hardware such as an electronic device, an application, a server, or a storage medium that performs the operation of the technical solution of the present disclosure according to the prompt information.

As an optional but non-limiting implementation, the manner of sending the prompt information to the user in response to receiving the active request from the user may be, for example, a pop-up window, and the prompt information may be presented in the pop-up window in text. In addition, the pop-up window may further include a selection control for the user to select "agree" or "disagree" to provide the personal information to the electronic device.

It should be understood that the above process of notifying and obtaining user's authorization is only illustrative and does not limit the implementations of the present disclosure. Other manners that meet relevant laws and regulations may also be applied to the implementations of the present disclosure.

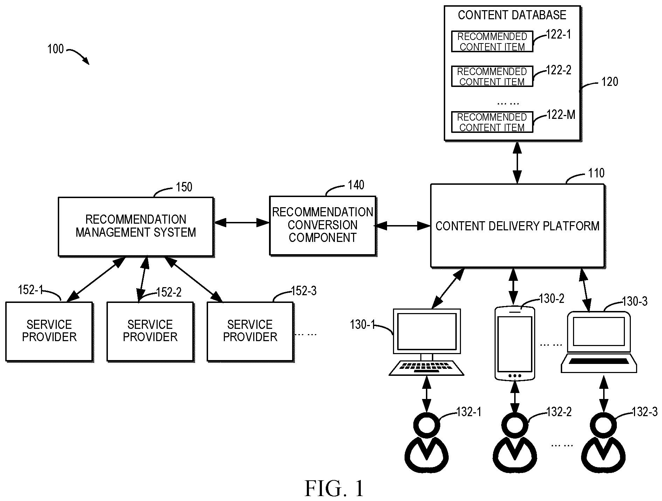

FIG. 1 shows a schematic diagram of an example environment 100 in which embodiments of the present disclosure can be implemented. One or more content providers may use a recommendation management system 150 to manage content to be delivered on a content delivery platform 110. One or more client devices 130-1, 130-2, 130-3, etc. (collectively or individually referred to as client devices 130 for ease of discussion) are associated with the content delivery platform 110 and may access various types of content provided on the content delivery platform 110, for example, based on corresponding users 132-1, 132-2, 132-3, etc. (collectively or individually referred to as users 132 for ease of discussion). As an example, the content delivery platform 110 may be an application, a website, a webpage, and other accessible platforms. The client device 130 may be installed with an application to access the content delivery platform 110, or may access the content delivery platform 110 in a suitable way.

The content delivery platform 110 may be configured to deliver one or more specific recommended content items related to one or more services (for example, provided or presented on the client device 130) to a user population based on corresponding policies. The recommended content items to be delivered may include, for example, one or more recommended content items 122-1, 122-2,..., 122-M (collectively or individually referred to as recommended content items 122 for ease of discussion) in a content database 120.

Herein, a service may include various objects that can be recommended, examples of which may include applications, physical goods/services, virtual goods/services, digital content/physical content, and so on. Herein, the "recommended content item" refers to content presented to recommend a corresponding service. An example of the recommended content item may include an advertisement. Herein, a user population may include one or more user members, such as the users 132. A user member may be any potential consumer of a service, such as a user, a group, an organization, an entity, and so on.

In some embodiments, the content delivery platform 110 may distribute the corresponding recommended content item 122 to the users 130 based on requests from service providers 152-1, 152-2, 152-3, etc. (collectively or individually referred to as "service providers" 152). In the scenario of advertisement delivery, a service provider is sometimes also referred to as an advertiser. In some embodiments, a content display opportunity (for example, a recommended content item presented to a specific client device 130 at a specific time and a specific position) on the content delivery platform 110 may be selected based on a bidding result. For example, bids may be received from service providers, and the content display opportunity may be allocated to a highest bidder, which means that a corresponding recommended content item may be successfully delivered in competitive delivery. The bid may refer to a cost spent on competing for delivery of a certain recommended content item at a certain content display opportunity.

In some embodiments, the service provider may also pay a fee to the provider of the content delivery platform 110 based on the presentation of the recommended content item and subsequent conversions. The recommendation conversion component 140 is configured to collect a conversion result of the users 132 on the recommended content item. The conversion result of the recommended content item may include viewing, clicking, downloading, paying, adding to cart, etc. of the recommended content item, and the specific conversion behavior is related to the recommended service and the service provider.

In some embodiments, the recommended content item 122 may be related to a form capable of collecting information. This type of recommended content item is sometimes also referred to as a form advertisement. In this way, form information collection can be performed within the platform by presenting the form. The form advertisement may be used to invite users to subscribe to a service, provide a service estimate, answer follow-up service introduction, and receive information from a service provider, etc. The form submission, that is, information collected through the form, may also be determined by the recommendation conversion component 140 as a conversion result of the recommended content item.

In the environment 100, the recommendation management system 150 may be configured to deliver recommended content items related to forms. In some embodiments, form information collected through the delivered form may be stored. The recommendation management system 150 may provide the collected form information to an information demander based on an information request from the service provider 152. In some embodiments, the service provider may also include a service provider that requests to deliver the recommended content item, or may be other information demander.

In the environment 100, the client device 130 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a TV receiver, a radio broadcast receiver, an eBook device, a game device, or any combination thereof, including accessories and peripherals of these devices or any combination thereof. In some embodiments, the client device 130 may also support any type of interface for the user (such as a "wearable" circuit, etc.).

In the environment 100, the content delivery platform 110, the recommendation conversion component 140, and/or the recommendation management system 150 may be, for example, various types of computing systems/servers capable of providing computing power, including but not limited to a mainframe, an edge computing node, a computing device in a cloud environment, and so on. Although shown separately, one or more of the content delivery platforms 110, the recommendation conversion component 140, and/or the recommendation management system 150 may be combined.

It should be understood that the components and arrangements in the environment shown in FIG. 1 are only examples, and a computing system suitable for implementing the example embodiments described in the present disclosure may include one or more different components, other components, and/or different arrangements.

When a user browses content, including browsing a recommended content item, the user may request to view a service details page corresponding to the recommended service in order to obtain more information. Traditionally, the service details page only includes content defined independently by a certain service provider, that is, the page only presents a service provided by a specific service provider. This not only is not conducive for the user to obtain information and make a service decision, but also affects the efficiency of the user obtaining a plurality of services.

According to an embodiment of the present disclosure, an optimized content presentation solution is provided. According to this solution, a service viewing request is received from a client device. A primary service and at least one additional service to be provided are determined in response to the service viewing request. A presentation of an aggregate page is provided to the client device, where the aggregate page includes primary service information related to the primary service and additional service information related to the at least one additional service. The primary service information is presented at a higher priority than the additional service information or the primary service information is more prominently presented than the additional service information.

In this way, a user can be provided with an aggregate page including service information corresponding to a plurality of services, which can improve the efficiency of the user acquiring the service information and increase the probability that the service information is provided to the user.

Some example embodiments of the present disclosure will continue to be described below with reference to the drawings.

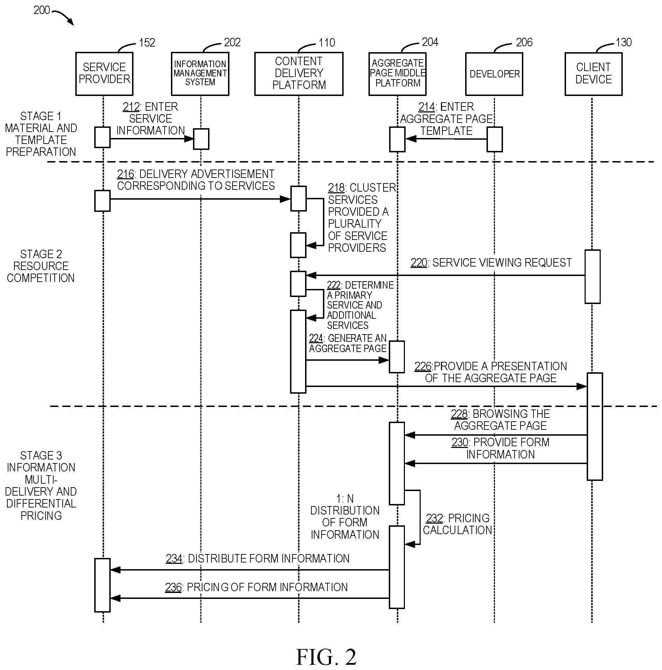

FIG. 2 shows a flowchart of a signaling flow 200 for page presentation according to some embodiments of the present disclosure. For ease of discussion, the signaling flow 200 is described with reference to FIG. 1. As shown in the signaling flow 200, the signaling flow 200 involves the client device 130, the recommendation management system 150, the developer 208, and the service provider 152. Note that the recommendation management system 150 is only discussed in combination for the purpose of discussion, but it should be understood that the embodiments of the present disclosure can be implemented in any appropriate device or system.

The recommendation management system 150 may include an information management system 202 and an aggregate page middle platform 204. Note that here, different components are only distinguished by functions for the purpose of discussion. Different components may be implemented in software, hardware, firmware, and any combination thereof. In practical applications, these components may also be divided in any other appropriate way.

In a material and template preparation stage (which may also be referred to as stage 1), the information management system 202 acquires (212) service information entered by the service provider 152, and the aggregate page middle platform 204 acquires (214) an aggregate page template entered by the developer 206. The developer 206 may be, for example, a professional who creates the aggregate page template. In the embodiments of the present disclosure, for different categories of services, the developer 206 may pre-define different aggregate page templates by category. The category here may be a service division performed according to any appropriate criteria and based on the characteristics of the supplied service. For example, different categories may be divided according to the industry to which the service belongs, or the service category may be divided in larger or smaller granularity. When a viewing request for a service details page of a certain service is detected from a client device, a page template corresponding to the service will be retrieved. The aggregate page template, for example, can be configured to define a structured page format for the service information. In this way, a page layout that can better highlight the characteristics of the service and help users understand the services in this category can be designed according to the characteristics of the service.

In a resource competition stage (which may also be referred to as stage 2), the content delivery platform 110 acquires (216) advertisements of corresponding services delivered by the service providers 152, and performs (218) clustering on services corresponding to a plurality of service providers (for example, N, where N is a positive integer greater than 1). The content delivery platform 110 may receive (220) a service viewing request from the client device 130. The service viewing request may be, for example, a viewing request for an advertisement corresponding to a service. The content delivery platform 110 determines (222) a primary service and at least one additional service to be provided in response to the service viewing request.

In some embodiments, if the service viewing request is a service viewing request for a specific service, the content delivery platform 110 may determine the service as the primary service, and determine, based on a type of the primary service, at least one additional service associated with the primary service. Specifically, the content delivery platform 110 may determine, from a service cluster matching the type of the primary service, the at least one additional service associated with the primary service, where the service cluster includes a plurality of services of a same type. For example, if a service cluster corresponding to type A includes 10 services, and the 10 services include service A and 9 other services, and the service viewing request is a service viewing request for service A, the content delivery platform 110 may determine the 9 other services as at least one additional service associated with the primary service.

In some embodiments, if the service viewing request is a viewing request for a service cluster of a certain type, the content delivery platform 110 may determine, from a plurality of candidate services provided by a plurality of service providers, a primary service and at least one additional service based on a ranking of resource competition by the plurality of service providers. Here, a service provider corresponding to the primary service provides more resources in the resource competition than a service provider corresponding to the at least one additional service. For example, the service provider corresponding to the primary service provides 5 resources in the resource competition, while the service providers corresponding to the at least one additional service each provide 2 resources. This is because the primary service will be presented at a higher priority or more prominently, thereby obtaining more attention from users.

The service viewing request from the client device 130 may correspond to an advertisement viewing at a specific time and a specific position. For example, when browsing a feed or in web page traffic, advertisements may be delivered at specific time and position. Such time and position are also referred to as content display opportunity. A plurality of service providers 152 tend to compete for such content display opportunity. On the side of the recommendation management system, it may be determined which service providers 152 are provided with the content display opportunity through resource competition. The resource competition may include bids from the plurality of service providers 152, and the resources to be provided by the service providers 152 also refer to the bid values for the content display opportunity. The content display opportunity may be provided to a service provider with a higher bid.

In a traditional solution, one content display opportunity is provided to a service provider with a highest bid. In the embodiments of the present disclosure, services corresponding to a plurality of service providers to be aggregated and displayed may be determined based on a ranking of bids from the plurality of service providers. In some embodiments, a service provider corresponding to the primary service provides more resources in the resource competition than a service provider corresponding to the at least one additional service. That is, the bid of the service provider of the primary service is the highest, and the bid of the service provider corresponding to the additional service is lower than that of the service provider of the primary service, but also higher than other unsuccessful service providers.

Through such an aggregated display opportunity, service information of more service providers can be displayed. For an individual service provider, service display can also be obtained by paying lower resources, and for the content delivery platform, the total amount of resources obtained in a single content display opportunity can be unchanged or higher, and a higher conversion rate of users can be achieved.

The content delivery platform 110 may provide relevant information of the primary service and the at least one additional service to the aggregate page middle platform 204, so that the aggregate page middle platform 204 generates (224) an aggregate page based on the primary service, the at least one additional service, and the aggregate page template. The aggregate page here may include, for example, a primary details viewing entry corresponding to the primary service, and the primary details viewing entry is triggered to jump to a service details page corresponding to the primary service.

The aggregate page may further include, for example, a details viewing entry corresponding to respective one of the at least one additional service, and the details viewing entry is triggered to jump to a service details page corresponding to the corresponding additional service. The aggregate page may further include, for example, a primary form entry corresponding to the primary service, and the primary form entry is triggered to collect predetermined form information. The aggregate page may further include, for example, a form entry corresponding to each of the at least one additional service, and the form entry is triggered to collect predetermined form information. It should be understood that the aggregate page may include one or more of the above-mentioned primary details viewing entry corresponding to the primary service, the details viewing entry corresponding to each of the at least one additional service, the primary form entry corresponding to the primary service, and the form entry corresponding to each of the at least one additional service, and the aggregate page may further include other content items. The present disclosure does not limit the specific content of the aggregate page.

The aggregate page includes primary service information related to the primary service and additional service information related to the at least one additional service. The content delivery platform 110 may provide (226) a presentation of the aggregate page to the client device 130. The primary service information is presented at a higher priority than the additional service information or the primary service information is more prominently presented than the additional service information. The primary service information being presented at a higher priority may include that the primary service information is presented to the user earlier in time, or that the primary service information is located in an area in the aggregate page that is noticed by the user earlier with a greater probability. For example, in the aggregate page, a presentation location of the primary service information in the page may be located above a presentation location corresponding to the additional service information. The primary service information being more prominently presented than the additional service information refers to that if the two types of service information appear in the aggregate page at the same time, the primary service information may occupy a larger page area, be located in an upper area or a central area of the aggregate page, or the like. In this way, the primary service information in the aggregate page has greater attention from the user.

In some embodiments, if the primary service information needs to be presented at a higher priority than the additional service information, the content delivery platform 110 may provide, to the client device 130, a presentation of an aggregate page including the primary service information. The content delivery platform 110 may provide, to the client device 130, a presentation of an aggregate page including at least one additional service information in response to detecting a predetermined trigger operation on the aggregate page. The predetermined trigger operation may include, for example, detecting a predetermined interactive behavior for the primary service, and/or detecting an additional service viewing request.

In some embodiments, the predetermined interactive behavior for triggering the presentation of the additional service information may include a conversion behavior for the primary service. The conversion behavior refers to a behavior used to indicate the user's interest in the primary service in a service recommendation scenario. The conversion behavior may include the user providing form information for the primary service, the user's interactive behaviors such as following, favoriting, liking, commenting, etc. for the primary service, the user's behaviors such as downloading, purchasing, etc. for the primary service. The specific conversion behavior may be configured according to the type of the service and the needs of the actual application.

In some embodiments, the predetermined interactive behavior for triggering the presentation of the additional service information may include a behavior indicating that the user may not be interested in the primary service. For example, if an interactive behavior such as a page exit request or lack of interest in the primary service is detected, additional service information may be provided to allow the user to determine whether to continue learning about other similar services.

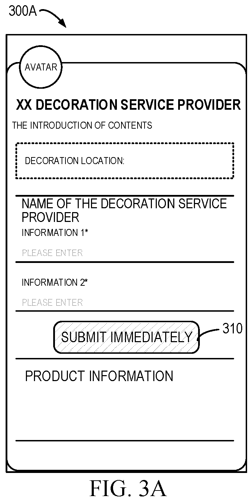

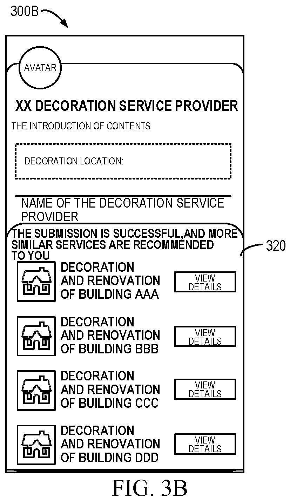

As shown in FIG. 3A and FIG. 3B, FIG. 3A and FIG. 3B show schematic diagrams of a plurality of example pages (i.e., example 300A and example 300B) according to some embodiments of the present disclosure. Example 300A may show an example of an aggregate page including primary service information, for example. Example 300A may include an operation control 310. In response to receiving a trigger operation for the operation control 310, it may be determined that a predetermined interactive behavior for the primary service is detected, and example 300B may be provided to the client device 130. Example 300B may show an example of an aggregate page including at least one additional service information, for example. Example 300B may include an area 320, and the area 320 includes at least one additional service information and a details viewing entry corresponding to respective one of the at least one additional service.

In some embodiments, an additional service viewing entry may also be provided while presenting the primary service information. In this way, if the user is not interested in the primary service or expects to learn about more similar services, the user may actively trigger the additional service viewing entry to view the service information of the at least one additional service.

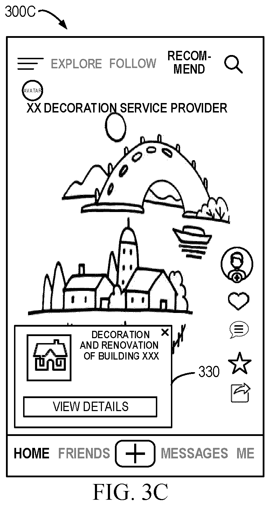

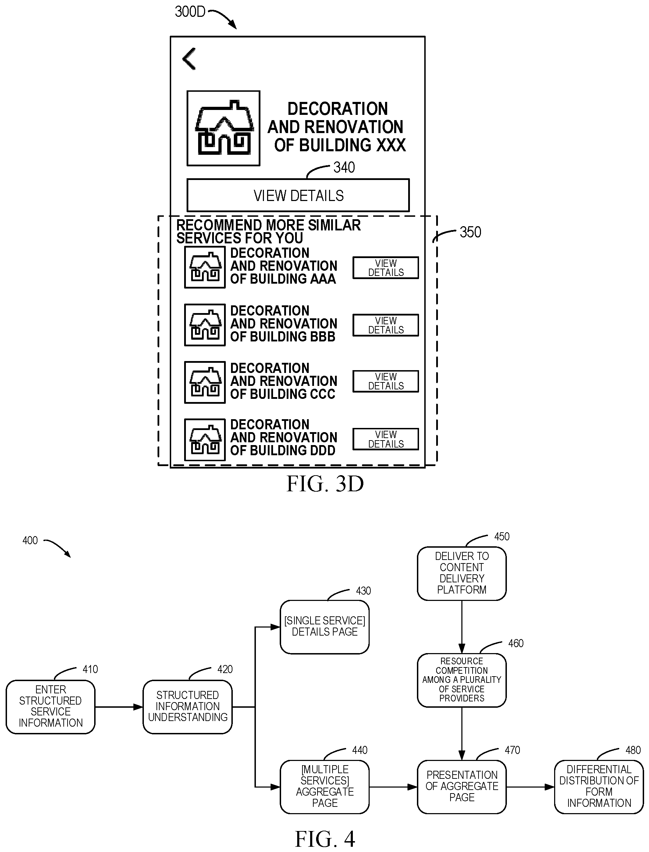

In some embodiments, the content delivery platform 110 may simultaneously present the primary service information and the additional service information in the aggregate page, where the primary service information is more prominently presented than the additional service information in the aggregate page. As shown in FIG. 3C and FIG. 3D, FIG. 3C and FIG. 3D show schematic diagrams of a plurality of example pages (i.e., example 300C and example 300D) according to some embodiments of the present disclosure. Example 300C shows an example of a content browsing page displaying a recommended content item. Example 300C includes a window 330, and the window 330 includes a "View Details" control. Example 300D may be presented in response to receiving a trigger operation for the "View Details" control. Example 300D may show an example of an aggregate page that simultaneously presents the primary service information and the additional service information, for example. Example 300D may include the primary service information and a primary details viewing entry 340 corresponding to the primary service, for example. Example 300D may further include an area 350, and the area 350 includes at least one additional service information and a details viewing entry corresponding to respective one of the at least one additional service.

Continuing to refer to FIG. 2, in an information multi-delivery and differential pricing stage (which may also be referred to as stage 3), the aggregate page middle platform 204 may present the aggregate page to allow a user corresponding to the client device 130 (such as the user 132) to browse (228) the aggregate page. The aggregate page middle platform 204 may also acquire (230) form information provided by the client device 130. For example, referring to FIG. 3A, the form information may be received via input boxes corresponding to "information 1" and "information 2" in example 300A.

The aggregate page middle platform 204 may perform (232) pricing calculation for the plurality of service providers 152 based on resources provided by the plurality of service providers 152 in the resource competition. The aggregate page middle platform 204 may distribute (234) the form information to the plurality of service providers 152 based on a result of the pricing calculation (that is, distribute form information corresponding to 1 user to N service providers 152, which process may also be referred to as 1:N distribution of the form information). The aggregate page middle platform 204 may further send (236) the result of the pricing calculation (that is, pricing of the form information for each service provider) to the plurality of service providers 152, respectively. Through differential pricing, more resources can be obtained from a primary service provider that attracts more attention from users, while relatively fewer resources are obtained from other additional service providers, realizing resource pricing according to importance during aggregation.

FIG. 4 shows a schematic diagram of an example 400 for content presentation according to some embodiments of the present disclosure.

At block 410, the recommendation management system 150 may acquire structured service information entered by a service provider.

At block 420, the recommendation management system 150 may perform structured information understanding on the structured service information.

For each of the plurality of service providers, the recommendation management system 150 may determine, based on a result of the structured information understanding, whether to present a details page of a single service or an aggregate page of a plurality of services.

At block 430, if the result indicates the presentation of the details page of the single service, the recommendation management system 150 may determine that a only a presentation of a details page including service information related to one service needs to be provided.

At block 440, if the result indicates the presentation of the aggregate page of the plurality of services, the recommendation management system 150 may determine that a presentation of a details page including service information related to a plurality of services needs to be provided.

At block 450, the recommendation management system 150 may deliver an advertisement including service information of the plurality of services to the content delivery platform.

At block 460, the recommendation management system 150 may instruct a plurality of service providers corresponding to the plurality of services to perform resource competition to determine a primary service and at least one additional service among the plurality of services.

At block 470, the recommendation management system 150 may provide, to the client device, a presentation of an aggregate page including primary service information related to the primary service and additional service information related to the at least one additional service, where the primary service information is presented at a higher priority than the additional service information or the primary service information is more prominently presented than the additional service information.

At block 480, the recommendation management system 150 may collect form information, and distribute the collected form information to the plurality of service providers in a differential distribution manner based on a result of the resource competition.

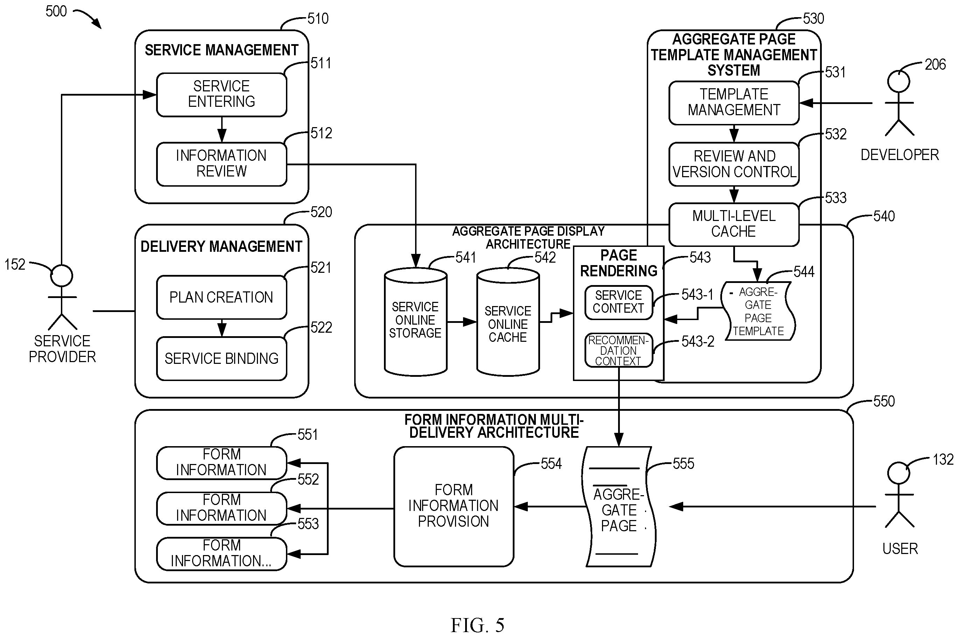

FIG. 5 shows a schematic diagram of an example 500 for content presentation according to other embodiments of the present disclosure. As shown in FIG. 5, the recommendation management system 150 may include five modules: a service management 510, a delivery management 520, an aggregate page template management system 530, an aggregate page display architecture 540, and a form information multi-delivery architecture 550. The service management 510 may have two submodules: a service entry 511 and an information review 512. The service entry 511 may acquire the service information entered by the service provider 152, and the information review 512 may review the acquired service information to determine whether the service information is compliant.

The delivery management 520 may have two submodules: a plan creation 521 and a service binding 522. The plan creation 521 may acquire a delivery plan for a service determined by the service provider 152, and the service binding 522 may bind the service information with the delivery plan. The delivery plan may indicate that a page corresponding to the service is a details page of a single service, and/or an aggregate page of a plurality of services.

The aggregate page template management system 530 may have three submodules: a template management 531, a review and version control 532, and a multi-level cache 533. The template management 531 may be configured to acquire an aggregate page template provided by the developer 206, and manage the acquired aggregate page template. The review and version control 532 may be configured to review the acquired aggregate page template to determine whether the aggregate page template is compliant. The multi-level cache 533 may be configured to cache the acquired aggregate page template (for example, cache to cloud space).

The aggregate page display architecture 540 may have three submodules: a service online storage 541, a service offline cache 542, and a page rendering 543. The service online storage 541 and the service offline cache 542 may respectively cache the service information in an online case or an offline case. The page rendering 543 may be configured to generate an aggregate page including the service information based on an aggregate page template 544 corresponding to the service and the service information. In some embodiments, the page rendering 543 may generate the aggregate page based on a service context 543-1 and a recommendation context 543-2 corresponding to the service. The service context 543-1 may indicate the service information, and the recommendation context 543-2 may indicate a result of resource competition among the plurality of services (that is, may indicate which service is the primary service and which services are the at least one additional service).

The form information multi-delivery architecture 550 may be configured to provide an aggregate page 555 to the user 132. The form information multi-delivery architecture 550 may include a submodule of form information provision 554. The form information provision 554 may be configured to acquire form information (i.e., form information 551, form information 552, form information 553, etc. in the figure, which multiple pieces of form information may include the same content) provided by the user 132 via the aggregate page 555, and distribute the form information to the plurality of service providers 152.

It should be understood that FIG. 5 only shows an architecture of an example, and the components involved in the service provider, the developer, and the user may be varied according to actual applications, and the embodiments of the present disclosure do not limit this aspect.

In summary, according to the embodiments of the present disclosure, a user can be provided with an aggregate page including service information corresponding to a plurality of services, which can improve the efficiency of the user acquiring the service information and increase the probability that the service information is provided to the user. Different service information is presented differentially in the aggregate page, which can enable a platform to perform differential resource pricing for different service providers, and enable the service providers to select a manner in which their respective service information is to be presented to the user as needed.

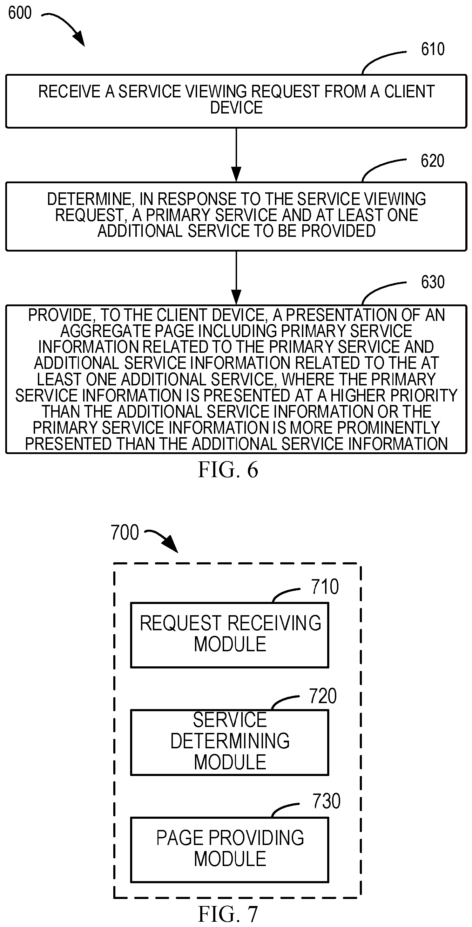

FIG. 6 shows a flowchart of a method 600 for content presentation according to some embodiments of the present disclosure. In some embodiments, the method 600 may be implemented in the recommendation management system 150. For the purpose of explanation, the method 600 will be described below from the perspective of the recommendation management system 150.

At block 610, the recommendation management system 150 receives a service viewing request from a client device.

At block 620, the recommendation management system 150 determines, in response to the service viewing request, a primary service and at least one additional service to be provided.

At block 610, the recommendation management system 150 provides, to the client device, a presentation of an aggregate page including primary service information related to the primary service and additional service information related to the at least one additional service, where the primary service information is presented at a higher priority than the additional service information or the primary service information is more prominently presented than the additional service information.

In some embodiments, determining the at least one additional service associated with the primary service based on a type of the primary service includes: determining, from a service cluster matching the type of the primary service, the at least one additional service associated with the primary service, where the service cluster includes a plurality of services of a same type.

In some embodiments, determining the primary service and the at least one additional service to be provided includes: determining, from a plurality of candidate services provided by a plurality of service providers, the primary service and the at least one additional service based on a ranking of resource competition by the plurality of service providers.

In some embodiments, a service provider corresponding to the primary service provides more resources in the resource competition than a service provider corresponding to the at least one additional service.

In some embodiments, the primary service information is presented at a higher priority than the additional service information, and providing the presentation of the aggregate page to the client device includes: providing, to the client device, a presentation of an aggregate page including the primary service information; and in response to detecting a predetermined trigger operation on the aggregate page, providing, to the client device, a presentation of an aggregate page including the at least one additional service information.

In some embodiments, the predetermined trigger operation includes at least one of: detecting a predetermined interactive behavior for the primary service, or detecting an additional service viewing request.

In some embodiments, providing the presentation of the aggregate page to the client device includes: presenting the primary service information and the additional service information simultaneously in the aggregate page, where the primary service information is more prominently presented than the additional service information in the aggregate page.

In some embodiments, the aggregate page includes at least one of: a primary details viewing entry corresponding to the primary service, where the primary details viewing entry is triggered to jump to a service details page corresponding to the primary service, a details viewing entry corresponding to respective one of the at least one additional service, where the details viewing entry is triggered to jump to a service details page corresponding to the corresponding additional service, a primary form entry corresponding to the primary service, where the primary form entry is triggered to collect predetermined form information, or a form entry corresponding to respective one of the at least one additional service, where the form entry is triggered to collect predetermined form information.

The embodiments of the present disclosure further provide corresponding apparatus for implementing the above methods or processes. FIG. 7 shows a schematic structural block diagram of an apparatus 700 for content presentation according to some embodiments of the present disclosure. The apparatus 700 may be implemented as or included in the recommendation management system 150. Various modules/components in the apparatus 700 may be implemented by hardware, software, firmware, or any combination thereof.

As shown, the apparatus 700 includes a request receiving module 710 configured to receive a service viewing request from a client device. The apparatus 700 further includes a service determining module 720 configured to determine, in response to the service viewing request, a primary service and at least one additional service to be provided. The apparatus 700 further includes a page providing module 730 configured to provide, to the client device, a presentation of an aggregate page including primary service information related to the primary service and additional service information related to the at least one additional service, where the primary service information is presented at a higher priority than the additional service information or the primary service information is more prominently presented than the additional service information.

In some embodiments, the service determining module 720 is further configured to: determine, from a service cluster matching the type of the primary service, the at least one additional service associated with the primary service, where the service cluster includes a plurality of services of a same type.

In some embodiments, the service determining module 720 is further configured to: determine, from a plurality of candidate services provided by a plurality of service providers, the primary service and the at least one additional service based on a ranking of resource competition by the plurality of service providers.

In some embodiments, a service provider corresponding to the primary service provides more resources in the resource competition than a service provider corresponding to the at least one additional service.

In some embodiments, the primary service information is presented at a higher priority than the additional service information, and the page providing module 730 includes: a first page providing module configured to provide, to the client device, a presentation of an aggregate page including the primary service information; and a second page providing module configured to provide, to the client device, a presentation of an aggregate page including the at least one additional service information in response to detecting a predetermined trigger operation on the aggregate page.

In some embodiments, the predetermined trigger operation includes at least one of: detecting a predetermined interactive behavior for the primary service, or detecting an additional service viewing request.

In some embodiments, the page providing module 730 is further configured to: simultaneously present the primary service information and the additional service information in the aggregate page, where the primary service information is more prominently presented than the additional service information in the aggregate page.

In some embodiments, the aggregate page includes at least one of: a primary details viewing entry corresponding to the primary service, where the primary details viewing entry is triggered to jump to a service details page corresponding to the primary service, a details viewing entry corresponding to respective one of the at least one additional service, where the details viewing entry is triggered to jump to a service details page corresponding to the corresponding additional service, a primary form entry corresponding to the primary service, where the primary form entry is triggered to collect predetermined form information, or a form entry corresponding to respective one of the at least one additional service, where the form entry is triggered to collect predetermined form information.

The units and/or modules included in the apparatus 700 may be implemented in various ways, including software, hardware, firmware, or any combination thereof. In some embodiments, one or more units and/or modules may be implemented using software and/or firmware, such as machine-executable instructions stored on a storage medium. In addition to or as an alternative to the machine-executable instructions, some or all units and/or modules in the apparatus 700 may be implemented at least partially by one or more hardware logic components. As an example, rather than a limitation, example types of hardware logic components that may be used include a field programmable gate array (FPGA), an application specific integrated circuit (ASIC), an application specific standard product (ASSP), a system on chip (SOC), a complex programmable logic device (CPLD), and so on.

It should be understood that one or more steps in the above methods may be performed by an appropriate electronic device or a combination of electronic devices. Such an electronic device or a combination of electronic devices may include, for example, the client device 130 in FIG. 1, or the content delivery platform 110, the recommendation conversion component 140, and/or the recommendation management system 150.

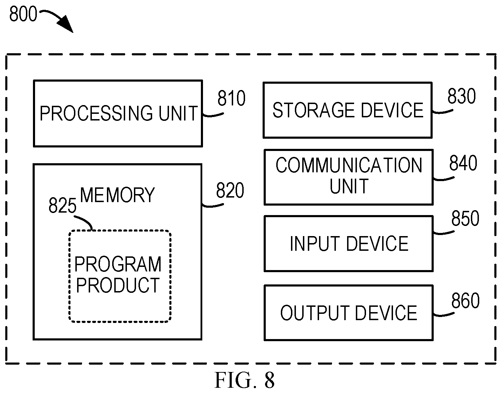

FIG. 8 shows a block diagram of an electronic device 800 in which one or more embodiments of the present disclosure can be implemented. It should be understood that the electronic device 800 shown in FIG. 8 is only illustrative and should not constitute any limitation on the functions and scope of the embodiments described herein. The electronic device 800 shown in FIG. 8 may be used to implement the client device 130, or the content delivery platform 110, the recommendation conversion component 140, and/or the recommendation management system 150 (or the components therein). The electronic device 800 may include or be implemented as the apparatus 700 in FIG. 7.

As shown in FIG. 8, the electronic device 800 is in the form of a general-purpose computing device. The components of the electronic device 800 may include, but are not limited to, one or more processors or processing units 810, a memory 820, a storage device 830, one or more communication units 840, one or more input devices 850, and one or more output devices 860. The processing unit 810 may be an actual or virtual processor and can perform various processes according to programs stored in the memory 820. In a multi-processor system, multiple processing units execute computer-executable instructions in parallel to improve the parallel processing capability of the electronic device 800.

The electronic device 800 generally includes multiple computer storage medium. Such medium may be any available medium accessible by the electronic device 800, including but not limited to volatile and non-volatile medium, removable and non-removable medium. The memory 820 may be a volatile memory (e.g., register, cache, random access memory (RAM)), a non-volatile memory (e.g., read-only memory (ROM), electrically erasable programmable read-only memory (EEPROM), flash memory), or some combination thereof. The storage device 830 may be a removable or non-removable medium and may include a machine-readable medium such as a flash drive, a disk, or any other medium that can be used to store information and/or data and can be accessed within the electronic device 800.

The electronic device 800 may further include additional removable/non-removable, volatile/non-volatile storage media. Although not shown in FIG. 8, a disk drive for reading from or writing into a removable, non-volatile disk (for example, a "floppy disk") and a disk drive for reading from or writing into a removable, non-volatile optical disk may be provided. In these cases, each drive may be connected to a bus (not shown) by one or more data media interfaces. The memory 820 may include a computer program product 825 having one or more program modules, which program modules are configured to perform various methods or acts of various embodiments of the present disclosure.

The communication unit 840 implements communication with other electronic devices through a communication medium. Additionally, the functions of the components of the electronic device 800 may be implemented by a single computing cluster or multiple computing machines that can communicate through communication connections. Therefore, the electronic device 800 may operate in a networked environment using a logical connection with one or more other servers, network personal computers (PCs), or another network node.

The input device 850 may be one or more input devices, such as a mouse, a keyboard, a trackball, etc. The output device 860 may be one or more output devices, such as a display, a speaker, a printer, etc. The electronic device 800 may further communicate with one or more external devices (not shown) through the communication unit 840 as needed, such as storage devices, display devices, etc., communicate with one or more devices that enable the user to interact with the electronic device 800, or communicate with any device (for example, a network card, a modem, etc.) that enables the electronic device 800 to communicate with one or more other electronic devices. Such communication may be performed via an input/output (I/O) interface (not shown).

According to an example implementation of the present disclosure, there is provided a computer-readable storage medium having computer-executable instructions stored thereon, where the computer-executable instructions are executed by a processor to implement the method described above. According to an example implementation of the present disclosure, there is also provided a computer program product, where the computer program product is tangibly stored on a non-transitory computer-readable medium and includes computer-executable instructions, and the computer-executable instructions are executed by a processor to implement the method described above.

Various aspects of the present disclosure are described herein with reference to flowcharts and/or block diagrams of the method, apparatus, device, and computer program product implemented in accordance with the present disclosure. It should be understood that each block of the flowcharts and/or block diagrams and combinations of blocks in the flowcharts and/or block diagrams may be implemented by computer-readable program instructions.

These computer-readable program instructions may be provided to a processing unit of a general-purpose computer, a special-purpose computer, or other programmable data processing apparatus, thereby producing a machine, so that the instructions, when executed by the processing unit of the computer or other programmable data processing apparatus, produce an apparatus for implementing the functions/acts specified in one or more blocks in the flowcharts and/or block diagrams. These computer-readable program instructions may also be stored in a computer-readable storage medium, and these instructions cause the computer, the programmable data processing apparatus, and/or other devices to work in a specific way. Therefore, the computer-readable medium storing the instructions includes a product, which includes instructions for implementing various aspects of the functions/acts specified in one or more blocks in the flowcharts and/or block diagrams.

The computer-readable program instructions may be loaded onto a computer, other programmable data processing apparatus, or other device, causing a series of operational steps to be performed on the computer, other programmable data processing apparatus, or other device to produce a computer-implemented process, such that the instructions executed on the computer, other programmable data processing apparatus, or other device implement the functions/acts specified in one or more blocks in the flowcharts and/or block diagrams.

The flowcharts and block diagrams in the drawings show possible architectures, functions and operations of the system, method and computer program product implemented in accordance with multiple implementations of the present disclosure. In this regard, each block in the flowchart or block diagram may represent a part of a module, program segment, or instruction, and the part of the module, program segment, or instruction contains one or more executable instructions for implementing specified logical functions. In some alternative implementations, the functions marked in the blocks may also occur in an order different from those marked in the drawings. For example, two consecutive blocks may actually be executed substantially in parallel, and sometimes may be executed in a reverse order, depending on the functions involved. It should also be noted that each block in the block diagram and/or flowchart, and the combination of blocks in the block diagram and/or flowchart, may be implemented by a dedicated hardware-based system that performs specified functions or actions, or may be implemented by a combination of dedicated hardware and computer instructions.

Various implementations of the present disclosure have been described above, and the above description is illustrative, not exhaustive, and not limited to the disclosed implementations. Many modifications and changes will be apparent to those of ordinary skill in the art without departing from the scope and spirit of the described implementations. The choice of terms used herein is intended to best explain the principles, practical applications, or improvements to the technology in the market of the implementations, or to enable other ordinary skill in the art to understand the implementations disclosed herein.

## Claims

1. A method (600) for content presentation, comprising:
receiving (610) a service viewing request from a client device;
determining (620), in response to the service viewing request, a primary service and at least one additional service to be provided; and
providing (630), to the client device, a presentation of an aggregate page comprising primary service information related to the primary service and additional service information related to the at least one additional service, wherein the primary service information is presented at a higher priority than the additional service information or the primary service information is more prominently presented than the additional service information.

2. The method (600) of claim 1, wherein determining the at least one additional service associated with the primary service based on a type of the primary service comprises:
determining, from a service cluster matching the type of the primary service, the at least one additional service associated with the primary service, wherein the service cluster comprises a plurality of services of a same type.

3. The method (600) of claim 1, wherein determining (620) the primary service and the at least one additional service to be provided comprises:
determining, from a plurality of candidate services provided by a plurality of service providers, the primary service and the at least one additional service based on a ranking of resource competition by the plurality of service providers.

4. The method (600) of claim 3, wherein a service provider corresponding to the primary service provides more resources in the resource competition than a service provider corresponding to the at least one additional service.

5. The method (600) of claim 1, wherein the primary service information is presented at a higher priority than the additional service information, and wherein providing (630) the presentation of the aggregate page to the client device comprises:
providing, to the client device, a presentation of an aggregate page comprising the primary service information; and
in response to detecting a predetermined trigger operation on the aggregate page, providing, to the client device, a presentation of an aggregate page comprising the at least one additional service information.

6. The method (600) of claim 5, wherein the predetermined trigger operation comprises at least one of:
detecting a predetermined interactive behavior for the primary service, or
detecting an additional service viewing request.

7. The method (600) of claim 1, wherein providing (630) the presentation of the aggregate page to the client device comprises:
presenting the primary service information and the additional service information simultaneously in the aggregate page, wherein the primary service information is more prominently presented than the additional service information in the aggregate page.

8. The method (600) of claim 1, wherein the aggregate page comprises at least one of:
a primary details viewing entry corresponding to the primary service, wherein the primary details viewing entry is triggered to jump to a service details page corresponding to the primary service,
a details viewing entry corresponding to respective one of the at least one additional service, wherein the details viewing entry is triggered to jump to a service details page corresponding to the corresponding additional service,
a primary form entry corresponding to the primary service, wherein the primary form entry is triggered to collect predetermined form information, or
a form entry corresponding to respective one of the at least one additional service, wherein the form entry is triggered to collect predetermined form information.

9. An apparatus (700) for content presentation, comprising:
a request receiving module (710) configured to receive a service viewing request from a client device;
a service determining module (720) configured to determine, in response to the service viewing request, a primary service and at least one additional service to be provided; and
a page providing module (730) configured to provide, to the client device, a presentation of an aggregate page comprising primary service information related to the primary service and additional service information related to the at least one additional service, wherein the primary service information is presented at a higher priority than the additional service information or the primary service information is more prominently presented than the additional service information.

10. An electronic device (800), comprising:
at least one processing unit (810); and
at least one memory (820) coupled to the at least one processing unit (810) and storing instructions executable by the at least one processing unit (810), wherein the instructions, when executed by the at least one processing unit (810), cause the device to perform the method according to any of claims 1 to 8.

11. A computer-readable storage medium having a computer program stored thereon, wherein the computer program, when executed by a processor, implements the method according to any of claims 1 to 8.

12. A computer program product being tangibly stored in a computer storage medium and comprising computer-executable instructions, wherein the computer-executable instructions, when executed by a device, cause the device to perform the method according to any of claims 1 to 8.
